# Europäisches Patentamt

## European Patent Office

## Office européen des brevets

(11) Publication number: **0 025 313**
**B1**

## EUROPEAN PATENT SPECIFICATION

(45) Date of publication of patent specification: **04.12.85**

(51) Int. Cl.⁴: **B 62 B 13/08**

(21) Application number: **80302970.1**

(22) Date of filing: **27.08.80**

(54) Bobsled.

(30) Priority: **29.08.79 GB 7929979**
**18.08.80 US 179012**

(43) Date of publication of application:
**18.03.81 Bulletin 81/11**

(45) Publication of the grant of the patent:
**04.12.85 Bulletin 85/49**

(84) Designated Contracting States:
**AT CH DE IT LI**

(56) References cited:
**CH-A- 165 004**
**FR-A-1 513 533**
**FR-A-1 566 429**
**FR-A-2 166 466**
**US-A-2 276 310**

(73) Proprietor: **EXCALIBUR AUTOMOBILE CORPORATION**
**1735 South 106th Street**
**Milwaukee Wisconsin 53214 (US)**

(72) Inventor: **Stevens, David Brooks**
**36324 South Beach Road**
**Oconomowoc Lake Village Wiscousin 53066 (US)**

(74) Representative: **Lippert, Hans, Dipl.-Ing. et al**
**Reichel und Reichel Parkstrasse 13**
**D-6000 Frankfurt (Main) 1 (DE)**

Courier Press, Leamington Spa, England.

## Description

The invention relates to a bobsled of the kind used to travel downhill and through banked turns on bobsled runs, especially of the type used in international competition.

The sport and technology of bobsledding involves a vehicle that achieves great speed and must be steerable through banked turns in which the sled may move from a generally horizontal plane to a generally vertical plane or travel in angular planes therebetween. The runners on a bobsled must be steerable in a horizontal plane to turn right or left and should be movable up and down to travel over non-horizontal and non-planar surfaces, all of this occurring as the sled hurtles downhill. The sled encounters shock and vibration as it travels over cracks and deformities in the surface of the ice-covered bobsled run. In the prior art, the primary measure of sled performance has been speed, which has been improved primarily through improving driver skills. Changes in equipment have been sporadic.

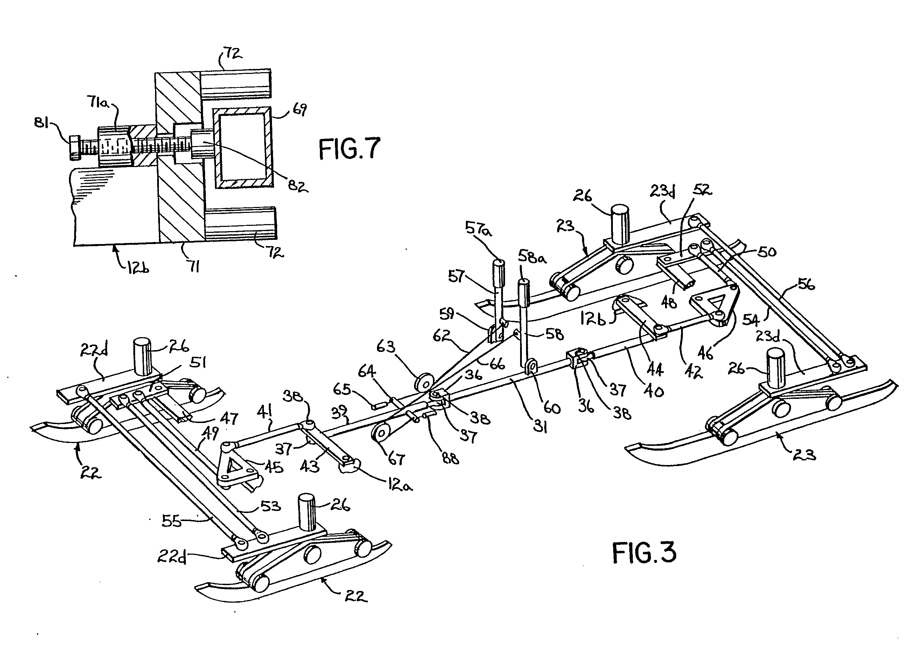

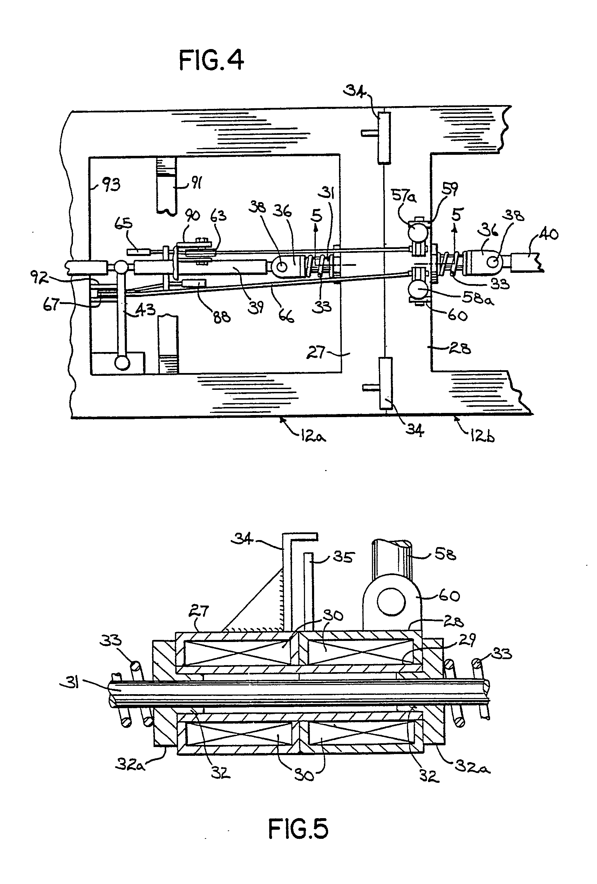

One of the best examples of the prior art is known from French Patent No. 1,566,429. This sled includes manually operable steering for the front runners only. As seen in Fig. 3 of this patent, the driver controls the front runners with steering straps 20 and handles 21. A T-shaped steering mechanism 15 is mounted on top of the chassis and is coupled to an H-frame formed underneath the chassis, as seen in Fig. 4. The H-frame comprises the front skis 28 and a transverse axle 25. The skis 28 are rotated as a unit with the axle 25 to maintain their parallel relationship. The axle can also be pivoted in a vertical plane around a sleeve 24 formed at its center. This sled is an example of the two-runner steering of the prior art.

There is a primary technical problem with two-runner steering control in bobsleds because the rear runner H-frame is either unsteerable, or the runners are allowed to turn on their own with some skidding that counteracts speed and decreases stability. The degree of this problem has been minimized in the prior art by improving driver skills and individual runner design.

In bobsleds with two-runner steering there can be no assurance that the rear runners will track on a thin film of water left by the track of the front runners. Prior to 1979, sleds have generally provided a stiff, unyielding ride because it has been thought that this is the way to achieve maximum speed. This follows from the physical law of conservation of momentum which provides that in a collision between a fast-moving, movable object and an immovable object, speed will be conserved if the collision is inelastic. The difficulty with the approach of a stiff riding sled is that greater driver effort is required to maintain the intended line down the course, which raises yet another problem.

In bobsled competition, the sleds are not driven down the natural line of the bobsled course because the natural or safe line has not been considered to be the faster line through the course. One achieves greater speed by "cutting corners" off the natural line of the course. Thus, it has been immaterial in the prior art whether bobsleds will tend to follow the safe line, because the driver will depart from this line during competition. There has not been a bobsled in the prior art which is suitable for carrying non-competitors down a competitive bobsled course.

The second technical problem, as shown by French patent No. 1,566,429 and Swiss Patent No. 165004 is that the hand straps could be dropped by drivers during a run. It would be very difficult in the sled known from the French patent to locate the strap below the cowl or body while keeping an eye on the course. The French patent does not resolve the problem created when a hand strap is dropped. Steering wheels were seen in early bobsleds in the 1930's but were discarded in favor of handstraps which are pulled to effect steering. Steering wheels are used in a vehicle known from U.S. Patent No. 2,276,310, which includes four fins that are controlled to steer the vehicle when it is traveling over ice that is slick and free of snow, and in a vehicle known from French Patent No. 2,166,466, which has four skis controlled through a cable and pulley system. Steering wheels rotate in a vertical or oblique plane rather than moving forward along the longitudinal axis of the sled and present a large obstacle to the driver of the sled in case of a spill or upset.

The next technical problem is the incorporation of a suspension system on a sled with four-runner steering control. The French Patent No. 1,566,429 shows shock absorbers 35 in Fig. 5 and the use of spring blades for individual runners. In the sled known from this patent, the H-frame is located under the sled and any linkage to connect the front and rear runners for steering would be also under the sled belly, which is a distinct disadvantage. It is not seen how a complete suspension would be added to such a steering system.

The invention as defined in claim 1 solves the technical problem of how to design a bobsled for travel downhill through banked turns of a bobsled course in which the driver can control and direct both the front and rear runners, thereby improving the stability and control of the sled.

Principally , the invention concerns a bobsled with four-runner steering control comprising a combination of steering links with pivotable connections that couple a pair of front runner assemblies mounted each on a first pivoting axle to a pair of rear runner assemblies mounted each on a second pivoting axle, in which the steering links control the position of these runner assemblies in multiple planes of rotation as the bobsled maneuvers through the steep and twisting corners of a bobsled run. The invention allows the rear runners to track in the lead track of the front runners and further allows the sled to follow the natural line of the course. This in turn produces greater stability. The addition of a suspension also adds greater stability, but the advance in the suspension resides in being the first to relate a pair of rear, steerable runner assemblies to the front steerable runner assemblies. The rough ride in prior sleds was due to the lack of suspension between the rear axle and the frame. The result of the invention is the first bobsled with the potential for carrying non-competitors down a bobsled course of the type used in international competition.

According to claim 2, the invention comprises a pair of lever type controls, sometimes referred to as "joy sticks". The joy sticks allow the shoulders of the driver to rotate in generally the same plane and in generally the same rotational direction as the front runner assemblies. While hand straps provide a pulling action, joy sticks can be arranged closer to the body for motion parallel to the longitudinal axis of the sled, and provide better leverage than hand straps. When constructed in such a way as to allow them to return to a neutral position if released by a driver during a run, joy sticks can be more easily regrasped by the driver.

According to claim 6, the invention provides a suspension system which is mounted on the sled and built compactly around the four-runner steering system to improve the handling characteristics of the sled. The suspension provides both springing and damping for pivoting axles rather than to individual runners. Preferably, the axles have been arranged to allow the steering linkage to pass therethrough.

One construction of a bobsled embodying this invention is illustrated by way of example, in the accompanying drawings:

Fig. 1 is a perspective view of a bobsled that embodies the present invention;

Fig. 2 is a perspective view of the bobsled of Fig. 1 without the body and steering actuation components to permit better viewing of the frame and suspension;

Fig. 3 is a diagrammatic view in perspective that illustrates the steering and control system in the bobsled of Fig. 1;

Fig. 4 is a top fragmentary view showing the center section of the frame and steering control system of the bobsled of Fig. 1;

Fig. 5 is a sectional view taken in the plane indicated by line 5—5 in Fig. 4;

Fig. 6 is a detail side view in elevation of a runner assembly of the bobsled of Fig. 1;

Fig. 7 is a sectional view showing one of the damper mechanisms as seen in the plane indicated by line 7—7 in Fig. 2; and

Fig. 8 is a side view in elevation of one of the spherical cam joints in Fig. 3.

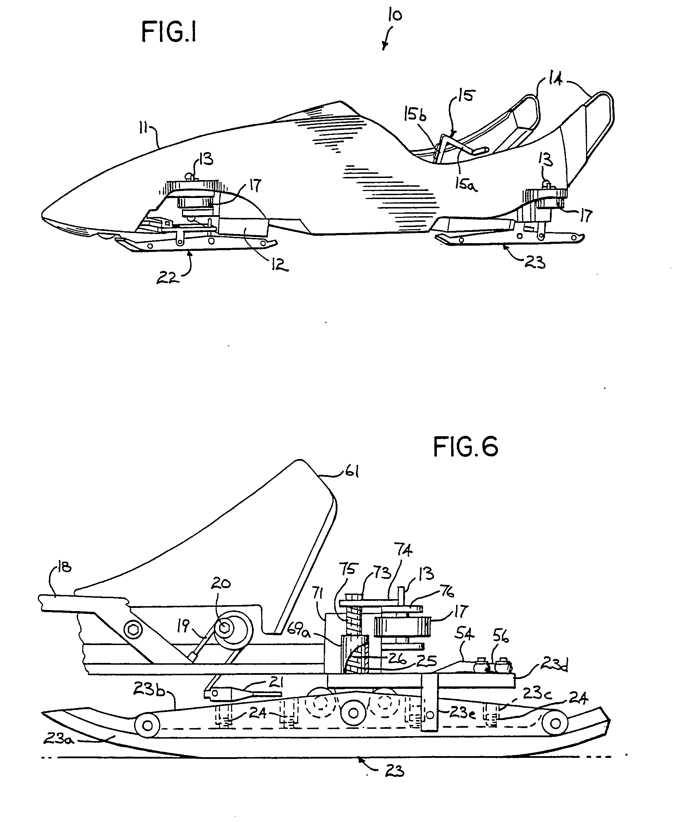

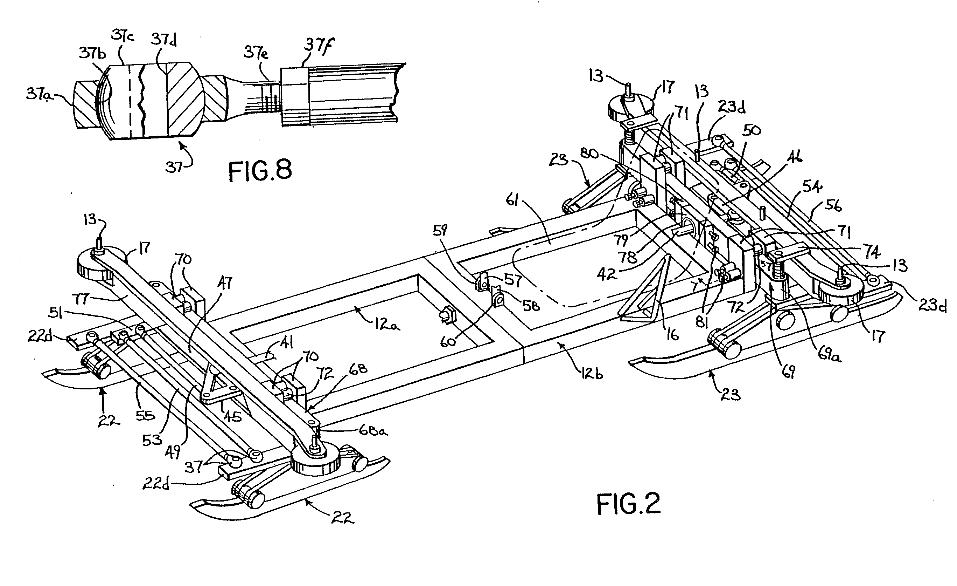

Referring to Fig. 1, a bobsled 10 that embodies the present invention has a fiberglass body 11 of sleek, aerodynamic design. The body 11 is mounted on a frame 12 seen in Fig. 2 and is held down on the front and rear of the frame 12 and the members supported therein, as seen in Figs. 1 and 2, by pin-style fasteners 13 of the type used to hold down the hoods of automobiles. Referring specifically to Fig. 1, the body 11 is formed around a pair of handles 14, which are located at the rear of the bobsled 10, and which are gripped by the members of the bobsled team to rock the bobsled 10 back and forth prior to a run down the course. A pusher bar 15 is seen in its raised position, where its arm 15a extends outside the left side of the body 11 when the sled 10 is pushed to start a run. The pusher bar 15 also has a shaft 15b that is telescoped into a sleeve 16 mounted on a rear frame section 12b as seen in Fig. 2. The pusher bar 15 is rotated into a position where it can slide down into the sleeve 16 and inside the left side of the body 11 after the start has been accomplished.

A portion of the body has been cut away in Fig. 1 to show two plastic discs 17 that are rotatably supported on the frame and which protrude from the edges of the body 11 to protect the front and rear ends of the sled from bumping the sidewall along a bobsled course. Two more of these discs 17 are located on the other side of the sled 10 as well, as seen in Fig. 2. When a run has been completed, the sled is braked with a mechanism seen in Fig. 6. The brake mechanism includes a brake lever 18 pivotally mounted on the rear frame section 12b and connected through a cable 19 and pulley 20 to a pivotable brake spud 21 that digs into the ice to prevent the sled 10 from sliding backward.

As seen in Figs. 2 and 3, the frame 12 is carried on two front runner assemblies 22 and two rear runner assemblies 23. As seen in Fig. 6, each runner assembly carries a flexible runner blade 23a with a web that is pivotally connected to a runner support 23b just behind the forward tip and just in front of the rear tip of the runner blade 23a. The runner support 23b has two laterally spaced side flanges joined by four webs 23c in which threaded holes are formed to receive set screws 24. The set screws 24 bear against the runner blade 23a, holding it in a more arcuate position as they are projected further out of the blade support 23b, and allowing the runner blade 23a to assume a flatter position when withdrawn into the blade support 23b. The amount of blade 23a that contacts the ice as determined by the flatness or the roundness of blade position is important to the performance of the bobsled.

Still referring to Fig. 6, runner blade support 23b is pivotally connected to a runner pivot arm 23d along an axis transverse to the longitudinal axis of the bobsled 10 to allow the runner assembly 23 to rock forward and backward against a spring 25 as the sled 10 goes over bumps. The runner blade support 23b is also connected to the pivot arm 23d at a distance from the kingpin 26, as shown by the fixed, vertical link plate 23e so that the runner assembly 23 is pivoted as a unit as the arm 23d is pivoted around the kingpin 26. The forward runner assemblies 22 of Figs. 1—3 are constructed the same as the rear runner assemblies 23 just described, except that their pivot arms 22d extend forward from their respective kingpins 26 rather than rearwardly as do the pivot arms 23d of the rear runner assemblies 23.

Referring to Fig. 2, where a belly pan (not shown) and the body 11 have been removed, the front and rear rectangular sections 12a and 12b of the frame are formed of either box steel or channel steel members welded together, the style of members in the two sections 12a and 12b being optional depending on design considerations such as weight and balance. Referring to Figs. 4 and 5, the front and rear frame sections 12a and 12b are articulately connected for independent swiveling motion around a central longitudinal axis. The center cross members 27 and 29 of the frame sections 12a and 12b rotate around a sleeve 29 on bearings 30 disposed in hollow portions of the members 27 and 28 and encircling the sleeve 29. The sleeve 29 extends through a bore along the longitudinal axis of the bobsled 10. A center-link steering actuator shaft 31 is carried in the bore of the sleeve 29 by a pair of bronze bushings 32. The bushings 32 include flanges 32a which are held against appropriate outside surfaces of the cross members 27 and 28 by springs 33 carried by the steering actuator shaft 31.

The angular articulation of the frame sections 12a and 12b is limited by the further structure seen in Fig. 5. A plate 34 of L-shaped cross section with a triangular supporting flange is welded to the central cross member 27 of the front frame section 12a. This plate 34 forms a stop for an upright plate 35 which includes a triangular support flange and which is welded to the central cross member 28 of the rear frame section 12b. The vertical movement of the plate 35 is restricted by the stop plate 34 to limit the angular displacement of the rear frame section 12b to ten degrees of rotation from the plane of the front section 12a.

As seen in Fig. 3, the center-link steering actuator shaft 31 is coupled at its forward end to a first intermediate actuator link 39 and at its rear end to a second intermediate actuator link 40. Referring also to Fig. 4, each of these connections is made through a clevis 36 and a spherical ball joint 37, which are coupled by a pin 38. The steering linkage in Fig. 3 contains about twenty of these joints 37, which provide limited pivotal movement of the pins 38 coupling the rigid members. The spherical ball joints 37 provide the steering linkage with the flexibility necessary to adjust to the articulated movement of the frame sections 12a and 12b, as well as to the movements of the runner assemblies 22 and 23 in a plane of rotation transverse to the longitudinal axis of the bobsled. 10.

The intermediate actuator links 39 and 40 are connected to front and rear actuator links 41 and 42, respectively, through pins 38 which couple the front pair of links 39 and 41 and rear pair of links 40 and 42 to respective idler arms 43 and 44. The front idler arm 43 is pivotally mounted on the front frame section 12a to the left side of the actuator linkage and extends to pivotal connection between a top joint 37 on the front link 41 and a bottom joint 37 on the connecting intermediate link 39. The rear idler arm 44 is pivotally mounted on the rear frame section 12b and extends to a similar connection to the rear actuator link 42 and its connecting intermediate link 40. The idler arms 43 and 44 assist in maintaining the axial position of links 39—42 when the steering linkage is subjected to torsional forces.

Front and rear bell cranks 45 and 46 are pivotally mounted on opposite sides of the axially disposed actuator linkage and each have a portion that extends from its pivot to connect to a spherical ball joint 37 at one end of the actuator linkage. The ball cranks 45 and 46 are mounted on cross bars 47 and 48 and positioned to the front and rear of the frame 12. A radial portion extending forwardly from the pivot of front bell crank 45 and a radial portion extending rearwardly from the pivot of the rear bell crank 46 connect through spherical ball joints 37 to a pair of first tie rods 49 and 50. The bell cranks 45 and 46 are rotated to translate linear motion along the longitudinal axis of the frame 12 into linear motion transverse and generally perpendicular to this axis. The first tie rods 49 and 50 at both the front and rear of the sled are connected through spherical ball joints 37 to reaction arms 51 and 52, which are pivotally mounted on the cross bars 47 and 48 just inside the right runner assemblies 22 and 23. Second tie rods 53 and 54 at the front and rear link the reaction arms 51 and 52 to respective pivot arms 22d and 23d on the left runner assemblies 22 and 23. Third tie rods 55 and 56 at the front and rear link the pivot arms 22d and 23d of each respective pair of runner assemblies 22 and 23, all of these connections being made through spherical ball joints 37.

Still referring to Fig. 3, when the actuator linkage is moved rearwardly the front bell crank 45 will pivot clockwise and will pivot the front runner assemblies 22 in a clockwise direction as well. At the same time, the rear bell crank 46 will pivot counterclockwise, thereby pivoting the rear runner assemblies 23 counterclockwise about their kingpins 26. If the actuator linkage is moved in a forward direction, the forward runner assemblies 22 will pivot in the counterclockwise direction and the rear runner assemblies will pivot in a clockwise direction. This provides for the positioning of the runner assemblies 22 and 23 for an arcuate sweep in turning maneuvers, where the rear runner blades 23a will travel at least partially in the fresh tracks made by the front runner blades 22a. The rear runner blades 23a may then take advantage of the thin film of water created by the passing of the front runner blades 22a to reduce friction and maintain or increase speed down the run.

As seen in Fig. 3, the axial movement of the actuator linkage is controlled through a pair of control levers 57 and 58 pivotally mounted on brackets 59 and 60, which are positioned just forward of the seat 61 (in phantom in Fig. 2) for the driver and brakeman. Each of the control levers 57 and 58 has a bicycle grip 57a and 58a on its uppermost end. A cable 62 is strung from a connection that is an appreciable radial distance from the pivot of the right-hand lever 57. The cable 62 is strung over a pulley 63, which maintains the alignment of the cable 62 between the lever 57 and an end of a stub shaft 64 that extends transversely through the intermediate actuator link 39. The cable 62 slides through a hole (not seen) in the right end of the shaft 64 and has an anchoring sleeve 65 on its free end to engage the stub shaft 64 when the right-hand lever 57 is pulled. A second cable 66 is similarly connected to the left-hand lever 58 but is then strung over a reversing pulley 67 and passes through the stub shaft 64 from the front, the cable 66 having an anchoring sleeve 88 attached just behind the stub shaft 64. As seen in Fig. 4, the first pulley 63 is mounted by a bracket 90 on an intermediate cross member 92 of the front frame section 12a. The second pulley 67 is mounted on a bracket on the front cross member 93 of the front frame section 12a.

With the control levers 57 and 58 connected as described above, the pivoting or pulling of the righthand control lever 57 towards the rear of the sled 10 will move the actuator linkage axially rearward. The pivoting or pulling of the left-hand control lever towards the rear of the sled 10 will move the actuator linkage axially forward due to the reversing connection through pulley 66. When one of the levers 57 or 58, or "joy sticks" as they are sometimes called, is pulled, the movement of the actuator linkage will tend to pivot the other lever 57 or 58 forward, thereby providing a push-pull mode of operation. This push-pull operation further provides a feel of rotation to the driver which corresponds to the direction of rotation of the front runner assemblies 22.

The control levers 57 and 58 must be pulled against the operating forces provided by the springs 33 encircling the center link shaft 31 in Fig. 4. The purpose of these springs 33 is to bring the actuator linkage back to a "neutral" position where the runner assemblies 22 and 23 are pointed straight ahead and parallel to the longitudinal axis of the sled 10. The bobsled 10 will find a path down the course if the runners are allowed to maintain the straight ahead position. The purpose of steering control is to allow the driver to take a faster path down the course, albeit a riskier one. If the driver's grip on the levers 57 and 58 is momentarily lost during a run, the control levers 57 and 58 are much easier to regrasp than the steering ropes of prior bobsleds. And, the spring return of the steering linkage to a "neutral" position will bring the control levers 57 and 58 to an upright position where they can be regrasped.

The handling of the bobsled 10 is enhanced by the provision of a suspension system carried by the frame 12 and built around the steering and control system. As seen in Fig. 2, front and rear axles 68 and 69 are carried between pairs of axle guide plates 70 and 71, each of the axles 68 and 69 being positioned in spaces between the guide plates 70 and 71 to move upward and downward. The guide plates 70 and 71 are mounted on opposite ends of the frame 12 and provide support for the cross bars 47 and 48 on which the bell cranks 45 and 46 are mounted. Cylindrical bumpers 72 of elastomeric material bridge the space between the guide plates 70 and 71 to cushion and limit the upward movement of the axles 68 and 69. Similar bumpers 72 may be provided across the bottom of the axles 68 and 69 to cushion return downward movement. The axles 68 and 69 form cylindrical spring housings 68a and 69a at their ends, where springs 25 are received as seen in Fig. 6. The kingpins 26 extend through the center of the springs 25 and through the top of the housings 68a, where they are secured with locknuts 73 on the front axle 68. As seen in Fig. 6, the rear axle 69 has double the springing of the front axle 68, due to a 2:1 weight ratio between the load on the rear axle 69 and the load on the front axle 68. Additional springs 75 are mounted on top of the rear spring housings 69a and the rear kingpins 26 are extended through the housings 69a and hold down bars 74 and are fastened with locknuts 73. The hold-down bars 74 are mounted on a rear cross beam 76, which in turn is mounted on the rear cross bar and axle guide plates 71. A front cross beam 77 is similarly mounted on the front cross bar 47 and axle guide plates 70. The cross beams 76 and 77 carry the plastic discs 17 described above as well as the shank portions of the pin-style fasteners 13 for holding down the body 11 on the frame 12. These beams 76 and 77 each have a top flange, two webs on opposite sides of an opening for the actuator linkage, and two bottom flanges jointed to the top flange by the webs.

Still referring to Fig. 2, the axles 68 and 69 are formed with annular flanges 78 that encircle openings in the axles 68 and 69 along the longitudinal axis of the sled 10, though which the front and rear actuator links extend. Rectangular collars 79 with circular openings are mounted on the circular flanges 78 and slide up and down between collar guide members 80 mounted to the extremities of the front and rear frame sections 12a and 12b. Damping is provided by pins 81 that are disposed in bores extending first through bosses 71a and then through the guide plates 70 and 71 and the collar guide members 80. The heads 82 on these pins 81, as seen in Fig. 7, have a coating of polytetrafluoroethylene and bear on the axles and on the sides of the collars to damp the response of the axles 68 and 69 to the action of the springs 25 and 75. Other suitable coatings may be provided on the heads 82 to reduce friction.

The result of this construction is that the axles 68 and 69 move vertically up and down as well as rotating about their annular flanges 78 up to a limit of ten degrees in a plane transverse to the sled axis. The spherical ball joints 37 provide for sufficient flexibility in the steering linkage to accommodate this movement. As seen in Fig. 8, each joint 37 includes a head 37a in which a race 37b is formed to receive a spherical ball 37c. The ball 37c has a bore for receiving a pin (not shown in Fig. 2) that pivots to a limit defined by the head 37a. The head 37a extends from a threaded shaft 37e that is screwed into a threaded bore in one end of the rigid member. Small adjusting nuts 37f are positioned on the threaded shaft 37e between the head 37a and the rigid member, so that linkage may be adjusted after the coupling pins are inserted. Performance of the steering linkage is improved if diametrical clearance between the ball 37c and the race 37b is nearly zero, which can be accomplished where one or more sliding surfaces are coated with polytetrafluoroethylene or other friction-reducing material with similar properties.

**Claims**

1. A bobsled (10) with four-runner steering control for travel downhill through banked turns of a bobsled course, the bobsled comprising:

a frame (12) formed along a longitudinal axis;

a front axle means (68) and rear axle means (69) mounted to opposite ends of the frame (12) for upward and downward movement in respective planes that are transverse to the longitudinal axis of the frame (12) comprising means for limiting the upward and downward movement of the axle means (68, 69);

two laterally spaced front runner assemblies (22) each pivotally connected to the front axle means (68) to move right and left, the front runner assemblies (22) being connected near the respective opposite ends of the front axle means (68);

two laterally spaced rear runner assemblies (23) each pivotally connected to the rear axle means (69) to move right and left, the rear runner assemblies (23) being connected near the respective opposite ends of the rear axle means (69);

a front link (55) pivotally connected at its opposite ends to opposite front runner assemblies (22) while allowing pivotal movement of each front runner assembly (22) with regard to left and right, and upward and downward movements;

a front steering motion translator (45) pivotally mounted on one side of the longitudinal axis of the frame (12), the front steering motion translator (45) having a first radial portion extending forward of its pivot and having a second radial portion extending laterally from its pivot towards the longitudinal axis;

means (49, 53, 37) for connecting the forwardly extending radial portion of the front steering motion translator to one of the front runner assemblies (22), such means allowing the pivoting of the connected runner assembly with regard to left and right, and upward and downward movements;

a rear link (56) pivotally connected at its opposite ends to opposite rear runner assemblies (23), while allowing pivotal movement of each rear runner assembly (23) with regard to left and right, and upward and downward movements;

a rear steering motion translator (46) pivotally mounted on the opposite side of the longitudinal axis of the frame from the pivot of the front steering motion translator (45), the rear steering motion translator having a first radial portion extending rearwardly from its pivot and having a second radial portion extending laterally from its pivot towards the longitudinal axis;

means (50, 54, 37) for connecting the rearwardly extending radial portion of the rear steering motion translator (46) to one of the rear runner assemblies (23), such means allowing the pivoting of the connected runner assembly with regard to left and right, and upward and downward movements;

a steering linkage (31, 36—42) carried longitudinally by the frame (12) and connecting the laterally extending radial portion of the front steering motion translator (45) to the laterally extending radial portion of the rear steering motion translator (46); and

manually operable steering control means (57, 58) coupled to the steering linkage (31, 36—42) longitudinally intermediate the front and rear steering motion translators (45, 46) for axial movement of the linkage (31, 36—42) to pivot the front and rear steering motion translators (45, 46) in opposite rotational directions, so that the rear runner assemblies (23) are pivoted counter to the front runner assemblies (22).

2. The bobsled (10) of claim 1, wherein the steering control means includes a pair of control levers (57, 58) pivotally mounted on the frame (12), one control lever (58) having an arm that is connected through a reversing device (67), and through a coupled connection (64) to the steering linkage (31, 36—42) to an arm of the other control lever (57), to impart axial movement to the steering linkage (31, 36—42) in response to pulling one of the levers.

3. The bobsled of claim 1, wherein the frame includes front and rear axle related frame sections (12a and 12b) and wherein the steering linkage includes:

a sleeve (29) disposed longitudinally on the frame (12);

a control shaft (31) mounted for axial movement through the sleeve (32a);

a front actuator linkage (39, 41) connecting a front end of the control shaft (31) to a traveling end of the laterally extending radial portion of the front steering motion translator (45), the front actuator linkage (39, 41) including the coupled connection to the steering control means (57, 58);

a front idler arm (43) connecting the front actuator linkage (39, 41) to the frame (12);

a rear actuator linkage (40, 42) connecting a rear end of the control shaft (31) to a traveling end of the laterally extending radial portion of the rear steering motion translator (46); and

a rear idler arm (44) connecting the rear actuator linkage (40, 42) to the frame (12), whereby the idler arms (43, 44) resist torsional forces applied to an actuator linkage.

4. The bobsled of claim 1, wherein the means connecting the front steering motion translator (45) to one of the front runner assemblies (22) includes a second front link (49) extending from the front steering motion translator (45) to a pivotal connection (51) on the opposite side of the longitudinal axis, and further includes a third front link (53) pivotally coupled to the second front link (49) and extending to the opposite side of the longitudinal axis to be pivotally connected to one of the front runner assemblies (22);

wherein the means connecting the rear steering motion translator (46) to one of the rear runner assemblies (23) includes a second rear link (50) extending from the rear steering motion translator (46) and away from the longitudinal axis to a pivotal connection (52) to the frame (12), and further includes a third rear link (54) pivotally coupled to the second rear link (50) and extending to the opposite side of the longitudinal axis to pivotally connect to one of the rear runner assemblies (23); and

wherein the pivotal connections (51, 52) of the second and third front links (49, 53) and the second and third rear links (50, 54) allows pivoting with regard to left and right, and upward and downward movements.

5. The bobsled of claim 1, wherein the pivotal connections of the front and rear links (49, 50, 53, 54, 55, 56) are made through spherical ball joints (37) located on the ends of the links and coupled through pins to allow twisting movement of the links relative to the runner assemblies.

6. The bobsled of claim 1, wherein:

the rear runner assemblies (23) are coupled through springs (25) to opposite ends of the rear axle (69);

wherein the rear axle (69) is carried between at least one pair of upright guide members (71) mounted on the rear end of the frame (12); and

wherein the steering linkage (31, 36—42) extends through the rear axle (69); and

further comprising a first damping member (81, 82) carried by one of the guide members (71) and bearing laterally against the rear axle (69) to control the upward and downward movement of the rear axle (69).

7. The bobsled of claim 6, wherein:

the rear axle (69) is formed with an annular flange (78) extending around the axis of the sled, the flange (78) defining the extension of an opening through the rear axle (69), the steering linkage (31, 36—42) extending through this opening;

further comprising a collar (79) mounted on the flange (78); and

further comprising a second damping member (81, 82) mounted to the frame (12) and engaging the collar (79) to further control the upward and downward movement of the rear axle (69) in response to the action of the springs (25).

8. The bobsled of claim 1, further comprising a pair of idler arms (43, 44) each pivotally connected at one end to the steering linkage (31, 36—42), one idler arm (43) extending on one side of the steering linkage (31, 36—42) to connect to the front frame section (12a), and the other idler arm (44) extending to the other side of the steering linkage (31, 36—42) to the rear frame section (12b) to support the steering linkage (31, 36—42) along the longitudinal axis of the bobsled (10) and to oppose torsional forces exerted on the steering linkage (31, 36—42).

## Revendications

1. Bobsleigh (10) à commande de braquage à quatre patins pour parcourir en pente des virages relevés d'une course de bobsleigh, ce bobsleigh comprenant:

un châssis (12) formé le long d'un axe longitudinal,

un essieu avant (68) et un essieu arrière (69) montés aux extrémités opposés du châssis (12) pour effectuer un mouvement vers le haut et vers le bas dans des plans respectifs qui sont transversaux à l'axe longitudinal du châssis (12) qui comprend des moyens pour limiter le mouvement vers le haut et vers le bas des essieux (68, 69),

deux unités de patin avant (22) latéralement espacées qui sont chacune reliées de manière à pouvoir pivoter par rapport à l'essieu avant (68) pour effectuer un déplacement vers la droite et vers la gauche, les unités de patin avant (22) étant reliées à proximité des extrémités opposées respectives de l'essieu avant (68),

deux unités de patin arrière (23) latéralement espacées, qui sont chacune reliées de manière à pouvoir pivoter à l'essieu arrière (69) pour effectuer un mouvement vers la droite et vers la gauche, les unités de patin arrière (23) étant reliées à proximité des extrémités opposées respectives de l'essieu arrière (69),

une bielle avant (55) reliée de manière à pouvoir pivoter à ses extrémités opposées aux unités de patin avant opposées (22), tout en permettant un mouvement de pivotement de chaque unité de patin avant (22) vers la gauche et la droite, et des mouvements vers le haut et vers le bas,

un organe de transmission de mouvement de braquage avant (45) monté de manière à pouvoir pivoter d'un côté de l'axe longitudinal du châssis (12), l'organe de transmission de mouvement de braquage avant (45) ayant une première partie radiale qui s'étend vers l'avant de son pivot et une seconde partie radiale qui 's'étend latéralement à partir de son pivot vers l'axe longitudinal,

des moyens (49, 53, 37) pour relier la partie radiale qui s'étend vers l'avant de l'organe de transmission de mouvement de braquage avant à l'une des unités de patin avant (22), ces moyens permettant le pivotement de l'unité de patin reliée vers la gauche et vers la droite, et des mouvements vers le haut et vers le bas,

une bielle arrière (56) qui est reliée de manière à pouvoir pivoter à ses extrémités opposées aux unités de patin arrière opposées (23), tout en permettant un mouvement de pivotement de chaque unité de patin arrière (23) vers la gauche et vers la droite, et des mouvements vers le haut et vers le bas,

un organe de transmission de mouvement de braquage arrière (46) qui est monté de manière à pouvoir pivoter du côté de l'axe longitudinal du châssis qui est opposé à celui du pivot de l'organe de transmission de mouvement de braquage

7

avant (45), l'organe de transmission de mouvement de braquage arrière ayant une première partie radiale qui s'étend vers l'arrière à partir de son pivot et une deuxième partie radiale qui s'étend latéralement depuis son pivot vers l'axe longitudinal,

des moyens (50, 54, 37) pour relier la partie radiale qui s'étend vers l'arrière de l'organe de transmission de mouvement de braquage arrière (46) à l'une des unités de patin arrière (23), ces moyens permettant le pivotement de l'unité de patin reliée vers la gauche et vers la droite, et des mouvements vers le haut et vers le bas,

une timonerie (31, 36—42) supportée longitudinalement par le châssis (12) et reliant la partie radiale qui s'étend latéralement de l'organe de transmission de mouvement de braquage avant (45) à la partie radiale qui s'étend latéralement de l'organe de transmission de mouvement de braquage arrière (46), et

des moyens de commande de braquage manoeuvrables manuellement (57, 58) couplés à la timonerie (31, 36—42) en un emplacement longitudinal intermédiaire aux organes de transmission de mouvement de braquage avant et arrière (45, 46) pour effectuer un mouvement axial de la timonerie (31, 36—42) en vue de faire pivoter les organes de transmission de mouvement de braquage avant et arrière (45, 46) dans des sens de rotation opposés, de façon que les unités de patin arrière (23) soient amenées à pivoter dans le sens opposé aux unités de patin avant (22).

2. Bobsleigh (10) suivant la revendication 1, caractérisé en ce que le moyen de commande de braquage comprend une paire de leviers de commande (57, 58) montés de manière à pouvoir pivoter sur le châssis (12), l'un des leviers de commande (58) ayant un bras qui est relié par un dispositif inverseur (67), et par une liaison couplée (64) à la timonerie (31, 36—42), à un bras de l'autre levier de commande (57), pour conférer un mouvement axial à la timonerie (31, 36—42) en réponse à la traction d'un des leviers.

3. Bobsleigh suivant la revendication 1, caractérisé en ce que le châssis comprend des sections de châssis (12a et 12b) associées à l'essieu avant et à l'essieu arrière et en ce que la timonerie comprend:

un manchon (29) disposé longitudinalement sur le châssis (12),

un arbre de commande (31) monté pour permettre un mouvement axial à travers le manchon (32a),

une tringlerie d'actionnement avant (39, 41) reliant une extrémité avant de l'arbre de commande (31) à une extrémité mobile de la partie radiale qui s'étend latéralement de l'organe de transmission de mouvement de braquage avant (45), la tringlerie d'actionnement avant (39, 41) comprenant la liaison couplée aux moyens de commande de braquage (57, 58),

un bras libre avant (43) qui relie la tringlerie d'actionnement avant (39, 41) au châssis (12),

une tringlerie d'actionnement arrière (40, 42) reliant une extrémité arrière de l'arbre de commande (31) à une extrémité mobile de la partie radiale qui s'étend latéralement de l'organe de transmission de mouvement de braquage arrière (46), et

un bras libre arrière (44) reliant la tringlerie d'actionnement arrière (40, 42) au châssis (12), les bras libres (43, 44) résistant aux forces de torsion appliquées à une tringlerie d'actionnement.

4. Bobsleigh suivant la revendication 1, caractérisé en ce que le moyen reliant l'organe de transmission de mouvement de braquage avant (45) à une des unités de patin avant (22) comprend une seconde bielle ayant (49) qui s'étend depuis l'organe de transmission de mouvement de braquage avant (45) jusqu'à une liaison permettant un pivotement (51) du côté opposé de l'axe longitudinal, et en ce qu'il comprend en outre une troisième bielle avant (53) couplée de manière à pouvoir pivoter à la seconde bielle avant (49) et s'étendant jusqu'au côté opposé de l'axe longitudinal pour être reliée de manière à pouvoir pivoter à l'une des unités de patin avant (22),

en en que le moyen reliant l'organe de transmission de mouvement de braquage arrière (46) à l'une des unités de patin arrière (23) comprend une seconde bielle arrière (50) qui s'étend depuis l'organe de transmission de mouvement de braquage arrière (46), en s'éloignant de l'axe longitudinal, jusqu'à une liaison permettant un pivotement (52) sur le châssis (12), et en ce qu'il comprend en outre une troisième bielle arrière (54) couplée de manière à pouvoir pivoter à la seconde bielle arrière (50) et s'étendant jusqu'au côté opposé de l'axe longitudinal pour être reliée de manière à pouvoir pivoter à une des unités de patin arrière (23), et

en ce que les liaisons permettant un pivotement (51, 52) des seconde et troisième bielles avant (49, 53) et des seconde et troisième bielles arrière (50, 54) permettent un pivotement vers la gauche et vers la droite et des mouvements vers le haut et vers le bas.

5. Bobsleigh suivant la revendication 1, caractérisé en ce que les liaisons permettant un pivotement des bielles avant et arrière (49, 50, 53, 54, 55, 56) sont réalisées par des joints à rotule sphériques (37) situés aux extrémités des bielles et couplés par des goujons pour permettre un mouvement de torsion des bielles par rapport aux unités de patin.

6. Bobsleigh suivant la revendication 1, caractérisé

en ce que les unités de patin arrière (23) sont couplées par des ressorts (25) aux extrémités opposées de l'essieu arrière (69),

en ce que l'essieu arrière (69) est supporté entre au moins une paire d'éléments de guidage dressés (71) montés sur l'extrémité arrière du châssis (12), et

en ce que la timonerie (31, 36—42) s'étend à travers l'essieu arrière (69), et

en ce que le bobsleigh comprend en outre un premier élément d'amortissement (81, 82) supporté par un des éléments de guidage (71) et en appui latéralement contre l'essieu arrière (69) pour commander le mouvement vers le haut et vers le bas de l'essieu arrière (69).

7. Bobsleigh suivant la revendication 6, caractérisé

en ce que l'essieu arrière (69) est formé avec une aile annulaire (78) qui s'étend autour de l'axe du bobsleigh, l'aile (78) délimitant l'extension d'une ouverture à travers l'essieu arrière (69), la timonerie (31, 36—42) s'étendant à travers cette ouverture,

en ce que le bobsleigh comprend en outre une bague (79) montée sur l'aile (78), et en ce qu'il comprend un second élément d'amortissement (81, 82) monté sur le châssis (12) et entrant en prise avec la bague (79) pour commander en plus le mouvement vers le haut et vers le bas de l'essieu arrière (69) en réponse à l'action des ressorts (25).

8. Bobsleigh suivant la revendication 1, caractérisé en ce qu'il comprend en outre une paire de bras libres (43, 44) reliés chacun de manière à pouvoir pivoter à une extrémité de la timonerie (31, 36—42), l'un des bras libres (43) s'étendant d'un côté de la timonerie (31, 36—42) pour être relié à la section de châssis avant (12a) et l'autre bras libre (44) s'étendant de l'autre côté de la timonerie (31, 36—42) jusqu'à la section de châssis arrière (12b) pour supporter la timonerie (31, 36—42) le long de l'axe longitudinal du bobsleigh (10) et pour s'opposer aux forces de torsion exercées sur la timonerie (31, 36—42).

**Patentansprüche**

1. Rennschlitten (10) mit Vierkufenlenkung zur Abfahrt durch überhöhte Kehren einer Rennschlittenbahn, enthaltend:

einen entlang einer Längsachse ausgebildeten Rahmen (12);

eine Vorderachsenvorrichtung (68) und eine Hinterachsenvorrichtung (69), die an entgegengesetzten Enden des Rahmens (12) in quer zur Längsachse des Tahmens (12) verlaufenden jeweiligen Ebenen in Aufwärts- und Abwärtsrichtung beweglich angebracht sind und Mittel zum Begrenzen der Aufwärts- und Abwärtsbewegung der Achsenvorrichtungen (68, 69) aufweisen;

zwei in Seitenrichtung voneinander beabstandete Vorderkufenanordnungen (22), von denen jede an der Vorderachsenvorrichtung (68) nach rechts und links beweglich angelenkt ist, und zwar nache bei den jeweiligen entgegengesetzten Enden der Vorderachsenvorrichtung (68);

zwei in Seitenrichtung voneinander beabstandete Hinterkufenanordnungen (23), von denen jede an der Hinterachsenvorrichtung (69) nach rechts und links beweglich angelenkt ist, und zwar nahe bei den jeweiligen entgegengesetzten Enden der Hinterachsenvorrichtung (69);

ein vorderes Verbindungsglied (55), das mit seinen entgegengesetzten Enden an den einander gegenüberstehenden Vorderkufenanordnungen (22) so angelenkt ist, daß es eine Drehbewegung jeder Vorderkufenanordnung (22) nach Links und rechts sowie eine Aufwärts- und Abwärtsbewegung zuläßt;

einen auf einer Seite der Längsachse des Rahmens (12) drehbeweglich angebrachten vorderen Lenkbewegungsumsetzer (45), der einen von seinem Drehpunkt aus nach vorne gerichteten ersten Radialabschnitt und einen von seinem Drehpunkt aus seitwärts zur Längsachse hin gerichteten zweiten Radialabschnitt aufweist;

Mittel (49, 53, 37) zum Verbinden des nach vorne gerichteten Radialabschnitts des vorderen Lenkbewegungsumsetzers mit einer der Vorderkufenanordnungen (22) derart, daß diese Mittel die Drehbewegung der verbundenen Kufenanordnung nach links und rechts sowie die Aufwärts- und Abwärtsbewegung zulassen;

ein hinteres Verbindungsglied (56), das mit seinen entgegengesetzten Enden an den einander gegenüberstehenden Hinterkufenanordnungen (23) so angelenkt ist, daß es eine Drehbewegung jeder Hinterkufenanordnung (23) nach links und rechts sowie eine Aufwärts- und Abwärtsbewegung zuläßt;

einen bezogen auf den Drehpunkt des vorderen Lenkbewegungsumsetzers (45) auf der entgegengesetzten Seite der Längsachse des Rahmens drehbeweglich angebrachten hinteren Lenkbewegungsumsetzer (46), der einen von seinem Drehpunkt aus nach hinten gerichteten ersten Radialabschnitt und einen von seinem Drehpunkt aus seitwärts zur Längsachse hin gerichteten zweiten Radialabschnitt aufweist;

Mittel (50, 54, 37) zum Verbinden des nach hinten gerichteten Radialabschnitts des hinteren Lenkbewegungsumsetzers (46) mit einer der Hinterkufenanordnungen (23) derart, daß diese Mittel die Drehbewegung der verbundenen Kufenanordnung nach links und rechts sowie die Aufwärts- und Abwärtsbewegung zulassen;

ein vom Rahmen (12) in Längsrichtung getragenes Lenkgestänge (31, 36—42), das den seitwärts gerichteten Radialabschnitt des vorderen Lenkbewegungsumsetzers (45) mit dem seitwärts gerichteten Radialabschnitt des hinteren Lenkbewegungsumsetzers (47) verbindet; und

eine von Hand betätigbare, mit dem Lenkgestänge (31, 36—42) in Längsrichtung gesehen zwischen dem vorderen und hinteren Lenkbewegungsumsetzer (45, 46) verbundene Lenkbedienungsvorrichtung (57, 58) zum Bewirken einer Axialbewegung des Gestänges (31, 36—42) und einer entsprechenden Schwenkbewegung des vorderen und hinteren Lenkbewegungsumsetzers (45, 46) in zueinander entgegengesetzten Drehrichtungen, so daß die Hinterkufenanordnungen (23) gegensinnig zu den Vorderkufenanordnungen (22) gedreht werden.

2. Rennschlitten (10) nach Anspruch 1, bei dem die Lenkbedienungsvorrichtung ein Paar Bedienungshebel (57, 58) enthält, die am Rahmen (12) angelenkt sind, und bei dem der eine Bedienungshebel (58) einen Arm aufweist, der über ein Umkehrglied (67) und über ein mit dem Lenkgestänge (31, 36—42) gekuppeltes Verbindungsstück (64) mit einem Arm des anderen Bedienungshebels (57) so verbunden ist, daß beim Ziehen an einem der Hebel dem Lenkgestänge (31, 36—42) eine Axialbewegung mitgeteilt wird.

3. Rennschlitten nach Anspruch 1, bei dem der Rahmen ein Vorderachsen- und ein Hinterachsen-Rahmenteil (12a und 12b) aufweist und das Lenkgestänge enthält:

eine in Längsrichtung am Rahmen (12) angeordnete Hülse (29);

eine zum Ausführen einer Axialbewegung durch die Hülse (32a) angebrachte Steuerstange (31);

ein vorderes Verstellgestänge (39, 41), welches das vordere Ende der Steuerstange (31) mit dem bewegbaren Ende des seitwärts gerichteten Radialabschnitts des vorderen Lenkbewegungsumsetzers (45) verbindet und die Verbindungsmittel mit der Lenkbedienungsvorrichtung (57, 58) enthält;

einen vorderen Lenkzwischenhebel (43), der das vordere Verstellgestänge (39, 41) mit dem Rahmen (12) verbindet;

ein hinteres Verstellgestänge (40, 42), welches das hintere Ende der Steuerstange (31) mit dem bewegbaren Ende des seitwärts gerichteten Radialabschnitts des hinteren Lenkbewegungsumsetzers (46) verbindet; und

einen hinteren Lenkzwischenhebel (44), der das hintere Verstellgestänge (40, 42) mit dem Rahmen (12) verbindet, wobei die Lenkzwischenhebel (43, 44) Torsionskräften widerstehen, die auf ein Verstellgestänge ausgeübt werden.

4. Rennschlitten nach Anspruch 1, bei dem die Mittel zum Verbinden des vorderen Lenkbewegungsumsetzers (45) mit einer der Vorderkufenanordnungen (22) ein zweites vorderes Verbindungsglied (49) aufweisen, das sich vom vorderen Lenkbewegungsumsetzer (45) zu einer Gelenkverbindung (51) auf der entgegengesetzten Seite der Längsachse erstreckt, und ferner ein drittes vorderes Verbindungsglied (53) aufweisen, das mit dem zweiten vorderen Verbindungsglied (49) gelenkig verbunden ist und sich zur entgegengesetzten Seite der Längsachse erstreckend mit einer der Vorderkufenanordnungen (22) gelenkig verbunden ist;

bei dem die Mittel zum Verbinden des hinteren Lenkbewegungsumsetzers (46) mit einer der Hinterkufenanordnungen (23) ein zweites hinteres Verbingunsglied (50) aufweisen, das sich vom hinteren Lenkbewegungsumsetzer (46) von der Längsachse weglaufend zu einer Gelenkverbindung (52) am Rahmen (12) erstreckt, und ferner ein drittes hinteres Verbindungsglied (54) aufweisen, das mit dem zweiten hinteren Verbindungsglied (50) gelenkig verbunden ist und sich zur entgegengesetzten Seite der Längsachse erstreckend mit einer der Hinterkufenanordnungen (23) gelenkig verbunden ist; und

bei dem die Gelenkverbindungen (51, 52) zwischen dem zweiten und dritten vorderen Verbindungsglied (49, 53) sowie zwischen dem zweiten und dritten hinteren Verbindungsglied (50, 54) eine Drehbewegung nach links und rechts sowie eine Aufwärts- und Abwärtsbewegung zulassen.

5. Rennschlitten nach Anspruch 1, bei dem die Anlenkverbindungen des vorderen und hinteren Verbindungsglieds (49, 50, 53, 54, 55, 56) mit Hilfe an den Enden der Verbindungsglieder vorgesehener Kugelgelenke (37) ausgeführt sind, die mittels Zapfen die Verbindung so herstellen, daß eine Verdrehung der Verbindungsglieder gegenüber den Kufenanordnungen möglich ist.

6. Rennschlitten nach Anspruch 1, bei dem:

die Hinterkufenanordnungen (23) mit Hilfe von Federn (25) mit den entgegengesetzten Enden der Hinterachse (69) verbunden sind;

die Hinterachse (69) zwischen wenigstens einem Paar aufrechter Führungsteile (71) angeordnet ist, die am hinteren Ende des Rahmens (12) befestigt sind;

das Lenkgestänge (31, 36—42) durch die Hinterachse (69) geführt ist; und

ein von einem der Führungsteile (71) getragenes erstes Dämpfungsglied (81, 82) vorgesehen ist, das seitlich gegen die Hinterachse (69) drückt und auf diese Weise Einfluß auf die Aufwärts- und Abwärtsbewegung der Hinterachse (69) ausübt.

7. Rennschlitten nach Anspruch 6, bei dem:

die Hinterachse (69) mit einem ringförmigen Flansch (78) ausgebildet ist, der sich rund um die Achse des Schlittens erstreckt und die Verlängerung einer durch die Hinterachse (69) geführten Öffnung begrenzt, durch die sich das Lenkgestänge (31, 36—42) erstreckt;

ein am Flansch (78) angebrachter Bund (79) vorgesehen ist; und

ein am Rahmen (12) befestigtes zweites Dämpfungsglied (81, 82) vorgesehen ist, das am Bund (79) angreift und auf diese Weise weiteren Einfluß auf die Aufwärts- und Abwärtsbewegung der Hinterachse (69) in Verbindung mit der Wirkung der Federn (25) nimmt.

8. Rennschlitten nach Anspruch 1, bei dem ein Paar Lenkzwischenhebel (43, 44) vorgesehen sind, jeder Lenkzwischenhebel an seinem einen Ende mit dem Lenkgestänge (31, 36—42) gelenkig verbunden ist, der sich auf einer Seite des Lenkgestänges (31, 36—42) erstreckende eine Lenkzwischenhebel (43) mit einem vorderen Rahmenteil (12a) verbunden ist und der sich auf der anderen Seite des Lenkgestänges (31, 36—42) erstreckende andere Lenkzwischenhebel (44) mit einem hinteren Rahmenteil (12b) verbunden ist, wobei die Lenkzwischenhabel das Lenkgestänge (31, 36—42) entlang der Längsachse des Rennschlittens (10) unterstützen und Torsionskräften entgegenwirken, die auf das Lenkgestänge (31, 36—42) ausgeübt werden.

FIG.1

10

FIG.6

FIG.2

FIG.8

FIG.7

72

71a

69

81

82

12b

71

72

0 025 313

3

57a

26

23d

52

57

58a

23

50

59

12b

48

56

62

58

54

22d

26

63

66

36

44

46

51

64

60

23d

47

65

36

37

26

49

41

38

39

40

42

22

45

37

67

31

38

38

23

55

53

26

43

88

22d

12a

22

FIG.3

# FIG.4

# FIG.5